Europäisches Patentamt

(19) **European Patent Office** (11) Publication number: **0 014 034**

Office européen des brevets **B1**

(12) **EUROPEAN PATENT SPECIFICATION**

(45) Date of publication of patent specification: **12.01.83** (51) Int. Cl.³: **B 65 G 53/46**

(21) Application number: **80300048.8**

(22) Date of filing: **04.01.80**

(54) **Rotary valve.**

| | |
|---|---|
| (30) Priority: **19.01.79 ZA 790222** | (73) Proprietor: **BATEMAN EQUIPMENT LIMITED**<br>**Founders Building, Bartlett Road**<br>**Boksburg North Transvaal (ZA)** |
| (43) Date of publication of application:<br>**06.08.80 Bulletin 80/16** | (72) Inventor: **Shears, Barry Edward Graham**<br>**7 Acres Clymping**<br>**Littlehampton Sussex (GB)** |
| (45) Publication of the grant of the patent:<br>**12.01.83 Bulletin 83/2** | |
| (84) Designated Contracting States:<br>**AT BE CH DE FR GB IT LU NL SE** | (74) Representative: **Abbie, Andrew Kenneth**<br>**A.A. THORNTON & CO. Northumberland House**<br>**303/306 High Holborn**<br>**London, WC1V 7LE (GB)** |
| (56) References cited:<br>**DE - C - 9 404**<br>**DE - C - 169 724**<br>**DE - C - 575 176**<br>**US - A - 2 901 150** | |

Courier Press, Leamington Spa, England.

## Rotary valve

This invention relates to a rotary valve and more particularly a valve for transporting hard abrasive material, such as for example, quartzite or the like, to a pneumatic conveyor or the like.

We have been made aware of U.S. Patent Specification No. 2,901,150 which discloses a valve which is manually rotatable for dispensing a desired amount of granulated, powdered or liquid substance from a container. The valve disclosed in this U.S. patent specification includes a hollow open ended cylinder having a top end and a bottom end; a plurality of blades extending in radial planes in the cylinder and dividing the cylinder into a plurality of axially extending open ended compartments; a top and a bottom plate each respectively in slidable sealing engagement with the top and bottom ends of the compartments, the cylinder being rotatable relative to the plates; an inlet in the top plate; and an outlet in the bottom plate, the inlet and the outlet being disposed relative to the compartments such that when the top end of any one of the compartments communicates with the inlet, the bottom end of that compartment does not communicate with the outlet.

According to the present invention there is provided a rotary valve comprising a hollow open ended cylinder having a top end and a bottom end; at least one radially projecting axially extending blade in the cylinder dividing the latter into a plurality of axially extending open ended compartments, the or each blade spiralling from the top end of the cylinder to the bottom end thereof so that the top end of each compartment is circumferentially off-set from the bottom end thereof; a top and a bottom plate each respectively in slidable sealing engagement with the top and bottom ends of the compartments, the plates and the cylinder being rotatable relative to one another; an inlet in the top plate; and an outlet in the bottom plate, the inlet and outlet being disposed relative to the compartments such that when the top end of any one of said compartments communicates with the inlet, the bottom end of that compartment does not communicate with the outlet.

Such a rotary valve is particularly advantageous for transporting a hard abrasive material because the abrasive action of the material passing through a compartment will be relatively small in view of the sloping impact area defined by the spiralling blade.

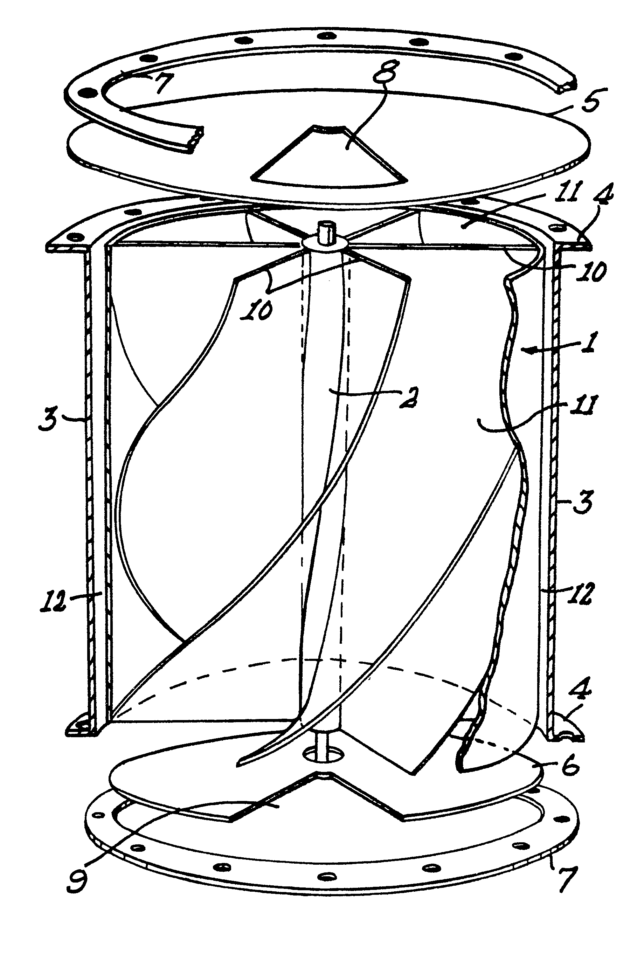

In order that the invention may be well understood, an embodiment thereof, which is given by way of example only will now be described, reference being made to the accompanying drawing which shows a fragmentary exploded diagrammatic view of a rotary valve for transporting a hard abrasive material.

The illustrated rotary valve includes a hollow open ended cylinder 1 which is mounted for rotation on a shaft 2 in an outer stationary cylindrical casing 3.

The open ends of casing 3, which include annular flanges 4, are respectively sealed off by means of a top plate 5 and a bottom plate 6 which are held in position by means of cover plates 7. The outer ends of cylinder 1 are in slidable sealing engagement with plates 5 and 6.

Plate 5 includes an aperture 8 having substantially the shape of a sector of a circle and defining an inlet to cylinder 1 and plate 6 has a similar aperture 9, which is located in line with aperture 8, and which defines an outlet to cylinder 1.

Cylinder 1 has integrally connected to it three radially extending blades 10 each of which extends across the diameter of cylinder 1 so that the latter is divided into six compartments 11 the open ends of which are of substantially the same size and configuration as apertures 8 and 9. Thus, each of the compartments 11, in plan view has substantially the shape of a sector of a circle.

Blades 10, which extend axially over the whole length of cylinder 1, spiral from the upper end of cylinder 1 to the lower end of cylinder 1 so that each compartment 11 extends helically about shaft 2. Because of the helical configuration of a compartment 11 its two open ends cannot communicate with inlet 8 and outlet 9 at the same time. Inlet 8 and outlet 9 can accordingly be maintained at different pressures while the valve is in operation.

In operation cylinder 1 is rotated by means (not shown) at a predetermined speed and material is fed at a predetermined rate through inlet 8 into the upper open end of that compartment 11 communicating with inlet 8 at that moment. As soon as the lower open end of that compartment 11 has moved to the point where it communicates with outlet 9, the material is discharged from compartment 11 through outlet 9.

Sweeping means (not shown) in the form of a brush or a blade, or an air operated cleaning device (not shown), may be provided in the vicinity of inlet 8 for sweeping off material falling onto the upper edges of blades 10. This prevents such material from being carried under plate 5.

Also, by maintaining the annular space 12 between cylinder 1 and casing 3 at the same pressure as that prevailing at outlet 9, the possibility of material escaping into the bottom sealing area is minimised.

By carefully controlling the speed of rotation of cylinder 1 and the rate at which material is fed through inlet 8, the time taken for material to pass from the upper end to the lower end of a compartment 11 can be made to be the same as that taken by the said upper and lower ends to move respectively into register with inlet 8 and outlet 9. A continuous constant flow of material through the valve can hence be achieved. Also, because the material passing through the valve does not strike normally onto any part of a compartment, the wear caused by the impact of such material onto the compartment is reduced to a minimum.

It will be appreciated that many variations in detail are possible to the illustrated rotary valve without departing from the scope of the appended claims.

Thus, for example, cylinder 1 may include any number of blades 10 so that cylinder 1 can be divided in fewer or more than the six compartments 11 shown in the drawing.

## Claims

1. A rotary valve comprising a hollow open ended cylinder (1) having a top end and a bottom end; at least one radially projecting axially extending blade (10) in the cylinder dividing the latter into a plurality of axially extending open ended compartments (11), the or each blade (10) spiralling from the top end of the cylinder (1) to the bottom end thereof so that the top end of each compartment (11) is circumferentially offset from the bottom end thereof; a top and a bottom plate (5 and 6) each respectively in slidable sealing engagement with the top and bottom ends of the compartments, the plates and the cylinder being rotatable relative to one another; an inlet (8) in the top plate; and an outlet (9) in the bottom plate, the inlet and outlet being disposed relative to the compartments (11) such that when the top end of any one of said compartments (11) communicates with the inlet (8), the bottom end of that compartment does not communicate with the outlet (9).

2. A valve as claimed in claim 1, wherein the inlet (8) in the top plate (5) and the outlet (9) in the bottom plate (9) are located in line.

3. A valve as claimed in claim 1 or 2, wherein the cylinder (1) is mounted for rotation and the top and bottom plates (5, 6) are held stationary.

4. A valve as claimed in claim 3, wherein the cylinder (1) is adapted for rotation at such a speed that the time taken for material fed through the inlet (8) into a particular compartment at a predetermined rate to pass through that compartment is substantially the same as that taken by that compartment to move from that position where its top end communicates with the inlet (8) to that position where its bottom end communicates with the outlet (9).

5. A valve as claimed in any one of the preceding claims, wherein there are a plurality of said spiralling blades (10) which divide said cylinder (1) into a plurality of compartments (11), each of which in plan view has substantially the shape of a sector of a circle.

6. A valve as claimed in any one of claims 3 to 5, wherein the cylinder (1) is rotatably mounted within a stationary held open ended outer cylindrical casing (3), the open ends of which are closed off by the said top and bottom plates (5, 6).

7. A valve as claimed in claim 6, wherein an annular space defined between the cylinder (1) and the outer casing (3) is maintained at substantially the same pressure as that prevailing at the outlet (9).

## Revendications

1. Valve tournante comprenant un cylindre creux à extrémités ouvertes (1) comportant une extrémité supérieure et une extrémité inférieure; au moins une aube axiale (10) qui s'étend radialement dans le cylindre et qui divise ce cylindre en plusieurs compartiments axiaux à extrémités ouvertes (11), l'aube (10) ou chacune d'elles s'enroulant en hélice à partir de l'extrémité supérieure du cylindre (1) vers son extrémité inférieure, de sorte que l'extrémité supérieure de chaque compartiment (11) est décalée circonférentiellement de son extrémité inférieure; un plateau supérieur et un plateau inférieur (5 et 6) chacun en contact d'étanchéité coulissant respectivement avec les extrémités supérieure et inférieure des compartiments, les plateaux et le cylindre pouvant tourner les uns par rapport aux autres; une entrée (8) dans le plateau supérieur; et une sortie (9) dans le plateau inférieur, l'entrée et la sortie étant disposées par rapport aux compartiments (11) d'une minière telle que, lorsque l'extrémité supérieure de l'un quelconque des compartiments (11) communique avec l'entrée (8), l'extrémité inférieure de ce compartiment ne communique pas avec la sortie (9).

2. Valve suivant la revendication 1, caractérisée en ce que l'entrée (8) dans le plateau supérieur (5) et la sortie (9) dans le plateau inférieur (9) sont en ligne.

3. Valve suivant la revendication 1 ou 2, caractérisée en ce que le cylindre (1) est monté à rotation et les plateaux supérieur et inférieur (5) et (6) sont maintenus immobiles.

4. Valve suivant la revendication 4, caractérisée en ce que le cylindre (1) peut tourner à une vitesse telle que le temps mis par de la matière introduite par l'entrée (8) dans un compartiment particulier, à une vitesse prédéterminée, à traverser ce compartiment, soit en substance égal à celui mis par ce compartiment à passer de la position dans laquelle son extrémité supérieure communique avec l'entrée (8) à la position dans laquelle son extrémité inférieure communique avec la sortie (9).

5. Valve suivant l'une quelconque des revendications précédentes, caractérisée en ce que plusieurs aubes hélicoïdales (10) divisent le cylindre (1) en plusieurs compartiments (11) qui, en plan, ont chacun en substance la forme d'un secteur de cercle.

6. Valve suivant l'une quelconque des revendications 3 à 5, caractérisée en ce que le cylindre (1) est monté à rotation dans un fût cylindrique extérieur à extrémités ouvertes (3), maintenu immobile, les extrémités ouvertes de ce fût étant fermées par les plateaux supérieur et inférieur (5, 6).

7. Valve suivant la revendication 6, caractérisée en ce qu'un espace annulaire formé entre le cylindre (1) et le fût extérieur (3) est maintenu en substance à la même pression que celle qui règne à la sortie (9).

**Patentansprüche**

1. Drehventil, bestehend aus einem offenen Hohlzylinder (1) mit einem Oberende und einem Unterende, mindestens einem radial vorstehenden, sich axial erstreckenden Blatt (10) in dem Zylinder, das diesen in mehrere sich axial erstreckende Abteile (11) mit offenen Enden unterteilt, wobei das Blatt bzw. die Blätter (10) jeweils schraubenlinienförmig vom Oberende des Zylinders (1) zu dessen Unterende verlaufen, so dass das Oberende jeden Abteils (11) gegen dessen Unterende peripher versetzt ist, einer Deckelplatte und Bodenplatte (5 bzw. 6), die jeweils in gleitendem und dichtendem Eingriff mit den Ober- bzw. Unterenden der Abteile stehen, wobei die Platten und der Zylinder gegeneinander drehbar sind, einem Einlass (8) in der Deckelplatte und einem Auslass (9) in der Bodenplatte, wobei der Einlass und Auslass gegenüber den Abteilen (11) so angeordnet sind, dass, wenn das Oberende irgendeines dieser Abteile (11) mit dem Einlass (8) in Verbindung steht, das Unterende jenes Abteils nicht mit dem Auslass (9) in Verbindung steht.

2. Ventil nach Anspruch 1, worin der Einlass (8) in der Deckelplatte (5) und der Auslass (9) in der Bodenplatte (9) aufeinander ausgerichtet sind.

3. Ventil nach Anspruch 1 oder 2, worin der Zylinder (1) drehbar gelagert ist und die Deckel- und Bodenplatten (5, 6) fest angeordnet sind.

4. Ventil nach Anspruch 3, worin der Zylinder (1) zur Rotation mit einer solchen Geschwindigkeit eingerichtet ist, dass die für den Durchgang von in einer vorbestimmten Menge durch den Einlass (8) in ein bestimmtes Abteil eingeführtem Material durch dieses Abteil erforderlich Zeit im wesentlichen der zur Bewegung dieses Abteils aus der Stellung, in welcher sein Oberende mit dem Einlass (8) in Verbindung steht, in die Stellung, in welcher sein Unterende mit dem Auslass (9) in Verbindung steht, erforderlichen Zeit gleich ist.

5. Ventil nach einem der vorhergehenden Ansprüche, worin mehrere solche schraubenlinienförmige, den besagten Zylinder (1) in mehrere Abteile (11) unterteilende Blätter (10 vorliegen, wobei die Abteile im Grundriss jeweils im wesentlichen die Gestalt eines Kreissektors aufweisen.

6. Ventil nach einem der Ansprüche 3 bis 5, worin der Zylinder (1) innerhalb eines fest montierten zylindrischen Aussengehäuses (3) mit offenen Enden, die durch die besagten Deckel- und Bodenplatten (5, 6) abgeschlossen sind, drehbar gelagert ist.

7. Ventil nach Anspruch 6, worin in einem von dem Zylinder (1) und dem Aussengehäuse (3) begrenzten Ringraum im wesentlichen der gleiche Druck wie der am Auslass (9) vorherrschende aufrechterhalten wird.